# EUROPEAN PATENT APPLICATION

(11) **EP 0 723 178 A2**
(43) Date of publication of application: **24.07.1996**
(21) Application number: 96830013.7
(22) Date of filing: 15.01.1996
(51) Int. Cl.: G02C 13/00

(54) **Device for allowing persons affected by vision troubles to obtain a proper vision in testing eyeglass frames having neutral lenses**

(30) Priority: 17.01.1995 IT MI950021 U
(71) Applicant: LAVAREDO S.r.l., 32044 Pieve Di Cadore (Belluno) (IT)
(72) Inventor: Garna, Luigi, c/o Lavaredo S.r.l., I-32044 Pieve di Cadore (IT)
(74) Representative: Cicogna, Franco

(57) **Abstract**

The present invention relates to a device for allowing persons affected by vision troubles to obtain a proper vision in testing eyeglass frames having neutral lenses.

The device comprises an auxiliary lens, which can be removably associated with the neutral lens of an eyeglass frame, in oder to provide a proper vision for an user bearing the frame of the eyeglass being tested.

## Description

### BACKGROUND OF THE INVENTION

The present invention relates to a device for allowing persons affected by vision troubles to obtain a proper vision in testing eyeglass frames having neutral lenses.

As is known, eyeglass frames are usually exposed for selling provided with neutral lenses, i.e. lenses which can not modify the vision but which allow a buyer to evaluate the aesthetic general effect of the eyeglasses.

However, the application of neutral lenses on new eyeglass frames will originate problems from those persons affected by vision problems or troubles, and desiring, before buying their eyeglass frame, to evaluate the aesthetic fitting of the frame to the face or other personal aesthetic characteristics.

Actually, for persons affected by vision troubles, is very difficult to properly evaluate the aesthetic aspect of a frame being tested through a simple vision by neutral lenses, since the reflected image which is reflected by a mirror used during the test is generally out of focus or scarcely sharp.

On the other hand, in order to properly evaluate the aesthetic effect of a new frame on a person face, it is necessary to fit the new frame and then remove suitable lens eyeglasses, which would allow the person to obtain a sharp vision, but which would prevent the person from fitting to his/her face the new frame.

### SUMMARY OF THE INVENTION

Accordingly, the aim of the present invention is to overcome the above mentioned drawback, by providing a device for allowing persons affected by vision troubles to obtain a proper vision, in testing eyeglass frames having neutral lenses, so as to easily and quickly evaluate the aesthetic effect of the new eyeglass frame on the face of a person.

Within the scope of the above mentioned aim, a main object of the present invention is to provide such a device which, while allowing a person to obtain a proper vision during the testing of a neutral lens eyeglass frame, does not remarkably alter the general aesthetic feature of the eyeglass frame, during the test.

Another object of the present invention is to provide such a device which can be used in a very simple and easy manner.

Another object of the present invention is to provide such a device which can be made at a comparatively reduced cost in a very broad range of optical powers, so as to meet all of the user requirements.

Yet another object of the present invention is to provide such a device which is very safe and reliable in operation.

According to one aspect of the present invention, the above mentioned aim and objects, as well as yet other objects, which will become more apparent hereinafter, are achieved by a device for allowing persons affected by vision troubles to obtain a proper vision, in testing eyeglass frames having neutral lenses, characterized in that said device comprises an auxiliary lens which can be removably associated with a neutral lens of the eyeglass frame, in order to provide an user bearing the eyeglass frame being tested, with a proper vision.

### BRIEF DESCRIPTION OF THE DRAWINGS

Further characteristics and advantages of the device according to invention will become more apparent hereinafter from the following detailed disclosure of said device which is illustrated, by way of a merely indicative, but not limitative, example, in the accompanying drawings, where:

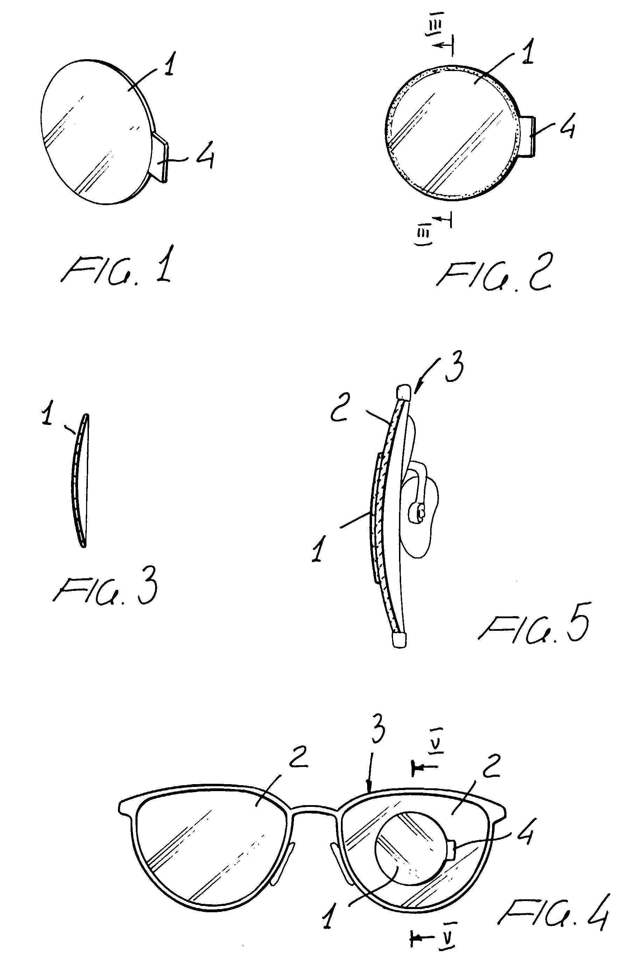

Figure 1 is a perspective view illustrating the device according to the invention;
Figure 2 is a front elevation view of the subject device;
Figure 3 is a cross-sectional view of Figure 2, substantially taken along the section line III-III;
Figure 4 illustrates the subject device as applied to a neutral lens of an eyeglass frame;

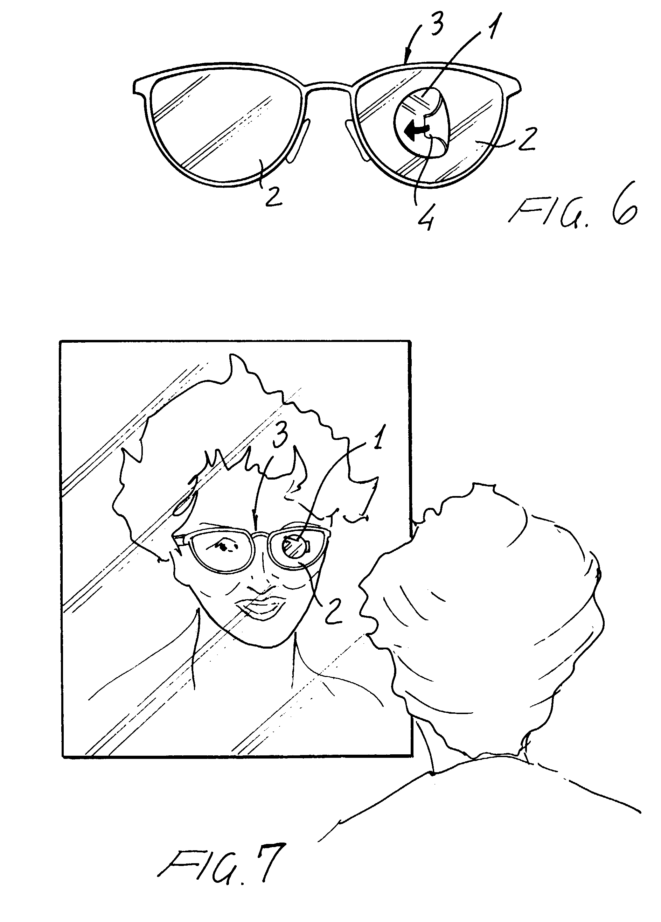

Figure 5 is a cross-sectional view of Figure 4, substantially taken along the section line IV-IV;
Figure 6 illustrates a procedure for applying to and removing the device from the lens of an eyeglass frame;
   and
Figure 7 illustrates the manner to use the device according to the invention.

### DESCRIPTION OF THE PREFERRED EMBODIMENTS

With reference to the number references of the above mentioned figures, the device according to the present invention substantially comprises an auxiliary lens 1 which can be removably associated with the neutral lens 2 of an eyeglass frame 3, in order to allow an user bearing the frame 3 of the eyeglass being testes to obtain a proper vision.

More specifically, the auxiliary lens 1 can be made of a silicone resin, or any other materials providing a good adhesion or binding to smooth surfaces made of glass, or it can be made of an optical synthetic material, such as that of neutral lenses which are mounted on the eyeglass frames being exposed for selling.

Alternately, the auxiliary lens 1 can be made of a lens synthetic material, or a stiffener material, and being provided, on the face thereof to be turned toward the neutral lens 2 of the eyeglass frame 3, with a perimetrical adhesive portion.

The auxiliary lens 1 is moreover provided, at a peripheral region thereof, with a side tab 4, for facilitating the removal thereof from the neutral lens 2, upon its application.

The face of the auxiliary lens 1 provided for facing the neutral lens 2 of the eyeglass frame, is preferably made with a concave configuration, so that it can be easily affixed to the neutral lens 2.

In fact, as the auxiliary lens 1 is made of a silicone resin, or of a resiliently flexible material, since the mentioned face or surface is made concave, it will provide, for the adhesion of the neutral lens 2, also a "sucker effect".

In this connection it should be apparent that the auxiliary lens 1 can be made with different optical characteristics, i.e. with a different optical power and different optical parameters, so as to fit all of the requirements.

The use of the device according to the invention is as follows.

As a potential buyer asks to test an eyeglass frame bearing neutral lenses, the vendor will preliminarily ask the buyer to submit the parameters of the lenses providing the buyer with a proper vision.

After having identified these parameters, the vendor will apply on the neutral lenses 2 of the eyeglass frame being tested, auxiliary lenses 1 corresponding to the mentioned parameters, so that the buyer, by fitting the new eyeglass frame with applied the auxiliary lenses 1, will obtain a proper vision and, accordingly, will evaluate in a very simple and accurate manner the aesthetic effect of the new eyeglass frame on his/her face.

As the user desires to test other eyeglass frames, then the vendor will simply remove the auxiliary lenses 1 previously applied to the first eyeglass frame under test and apply them, in turn, to the other eyeglass frames being tested by the buyer.

From the above disclosure and from an observation of the figures of the accompanying drawings, it should be apparent that the invention fully achieves the intended aim and objects.

In particular, it is to be pointed out the very high simplicity and facility of use of the subject device, which allows to perform an accurate testing of new eyeglass frames with neutral lenses, and this also by persons having very serious vision troubles.

In practicing the invention, the used materials, provided that they are compatible to the intended use, as well as the contingent size and shapes, can be any, depending on requirements.

In this connection it should be also apparent that the subject device can also be used in association with other optical apparatus, in all of those cases in which it is necessary to proper correct an user vision trouble.

## Claims

1. A device for allowing persons affected by vision troubles to obtain a proper vision, in testing eyeglass frames having neutral lenses, characterized in that said device comprises an auxiliary lens which can be removably associated with a neutral lens of the eyeglass frame, in order to provide an user bearing the eyeglass frame being tested, with a proper vision.

2. A device according to Claim 1, characterized in that said auxiliary lens is made of a silicone resin.

3. A device according to Claim 1, characterized in that said auxiliary lens is made of a synthetic material lens and is provided, on the face thereof provided for facing the neutral lens of the eyeglass frame, with a perimetrical adhesive portion.

4. A device according to one or more of the preceding claims, characterized in that said auxiliary lens is provided with a side tab, adapted to allow said auxiliary lens to be detached from the eyeglass frame neutral lens.

5. A device according to one or more of the preceding claims, characterized in that the face of said auxiliary lens provided for facing said eyeglass frame neutral lens is made concave.
